# EUROPÄISCHE PATENTSCHRIFT

(11) **EP 0 433 584 B1**
(45) Veröffentlichungstag und Bekanntmachung des Hinweises auf die Patenterteilung: **19.05.1993**
(21) Anmeldenummer: 90119157.7
(22) Anmeldetag: 05.10.1990
(51) Int. Cl.: B60R 1/06

(54) **Aussenspiegel für ein Kraftfahrzeug mit aufsteckbarer Kappe**
External rearview mirror for a vehicle with press-fitted cover
Rétroviseur extérieur pour un véhicule, avec capot emboîtable

(30) Priorität: 15.12.1989 DE 8914759 U
(43) Veröffentlichungstag der Anmeldung: 26.06.1991
(73) Patentinhaber: HOHE KG, D-97903 Collenberg (DE)
(72) Erfinder: Polzer, Herwig, W-8760 Miltenberg (DE)
(74) Vertreter: Zinngrebe, Horst, Dr.rer.nat.

(56) Entgegenhaltungen:
- DE-A- 2 703 639
- DE-A- 3 344 539
- DE-U- 8 236 870
- FR-A- 2 501 600

## Beschreibung

Die Erfindung betrifft einen Außenspiegel für ein Kraftfahrzeug mit einem an der Karosserie des Fahrzeugs befestigbaren Spiegelfuß und mit einem relativ zum Spiegefuß verschwenkbaren Spiegelgehäuse, welches ein auf einer Halteplatte befestigtes Spiegelglas seitlich umgibt und mit der Halteplatte verbunden ist, sowie mit einer auf den vorderen Teil des Außenspiegels aufsteckbaren und am Rand formschlüssig in das Spiegelgehäuse übergehenden Kappe.

Aus der deutschen Gebrauchsmusterschrift DE-U- 82 36 870 ist ein Außenspiegel bekannt, bei welchem auf einen vorderen Teil des aus schwarzem Kunststoff bestehenden Spiegelgehäuses eine gegebenenfalls andersfarbige Kappe aufsteckbar ist. Das Spiegelgehäuse seinerseits ist zur Minderung von Vibrationen des Spiegelglases mit Abstand über kleine Stützen an der Halteplatte befestigt, wie aus der DE-C- 28 13 316 hervorgeht. Die Kappe, die relativ fest auf das Spiegelgehäuse aufgesteckt werden muß, verändert jedoch das Schwingungsverhalten der aus Spiegelgehäuse und Kappe bestehenden Baugruppe derart, daß bei ungünstigen Betriebsbedingungen des Fahrzeugs Schwingungen des Spiegelgehäuses mit Kappe die Vibrationsfreiheit des Spiegelglases ungünstig beeinflussen.

Der Erfindung liegt daher die Aufgabe zugrunde, den Außenspiegel der eingangs genannten Art derart zu verbessern, daß die Vibrationsfreiheit der Halteplatte mit an ihr befestigtem Spiegelglas erhalten bleibt.

Erfindungsgemäß ist bei dem genannten Außenspiegel dazu vorgesehen, daß das Spiegelgehäuse vorne aufgeschnitten ist und daß die Kappe den nach vorne freiliegenden Teil der Halteplatte abdeckend an die Halteplatte lösbar angeklemmt ist. Die wesentliche Massereduzierung des Spiegelgehäuses verschiebt dessen Resonanzverhalten in einen Frequenzbereich, der die Wahrnehmbarkeit des Spiegelbildes im Spiegelglas nicht mehr nachteilig beeinflußt. Auch die vom Spiegelgehäuse schwingungsmäßig entkoppelte Kappe besitzt eine hinreichend hohe Eigenfrequenz, welche die Wahrnehmbarkeit des Spiegelbildes vibrationsunempfindlich sein läßt. Die Erfindung ermöglicht die Reduzierung des Volumens hinter dem Spiegelglas, was eine positive Beeinflussung des Schwingungsverhaltens im niederfrequenten Bereich bedeutet. Vor allem bei hoher Geschwindigkeit werden so Vibrationen des Spiegelglases verhindert.

Zweckmäßig stehen aus dem Boden der Kappe mehrere Spreizzapfen vor, welche an der Halteplatte ausgebildete freie Kanten, beispielsweise an Öffnungen der Halteplatte hintergreifen. Gegebenenfalls kann aus dem Inneren des Spiegelgehäuses wenigstens ein Haken vorstehen, welcher eine an der Kappe ausgebildete Schulter hintergreift. Diese Schulter kann in einem schwingungsmäßig unkritischen Bereich, beispielsweise in der Nähe des Spiegelfußes vorgesehen und an einer Öffnung der Kappe ausgebildet sein.

Mit besonderem Vorteil kann das Spiegelgehäuse an der an dem Spiegelfuß schwenkbar gelagerten Halteplatte befestigt sein, wobei das Spiegelgehäuse beispielsweise einen inneren, um die Halteplatte umlaufenden Steg aufweisen kann, welcher an der Halteplatte befestigt ist.

Es empfiehlt sich, aus dem Boden der Kappe mehrere Spreizzapfen vorstehen zu lassen, welche an der Halteplatte ausgebildetete freie Kanten lösbar hintergreifen. Mit Vorteil steht aus dem Innern des Spiegelgehäuses wenigstens ein Haken vor, welcher eine Schulter der Kappe hintergreift. Dann empfiehlt es sich, den Haken und die Schulter in der Nähe des Spiegelfußes auszubilden. Zweckmäßig sind die freien Kanten an Ausschnitten der Halteplatte vorgesehen. Nach einer besonders zweckmäßigen Ausführungsform der Erfindung ist das Spiegelgehäuse an der an dem Spiegelfuß schwenkbar gelagerten Halteplatte befestigt. Dann kann das Spiegelgehäuse einen inneren, um die Halteplatte umlaufenden Steg aufweisen, welcher an der Halteplatte befestigt ist. Schließlich empfiehlt es sich, jeden Spreizzapfen aus einem Paar von Fingern zu bilden, deren jeweiliges freies Ende eine angeformte Rastnase trägt.

Die Erfindung wird nachstehend anhand des in der beigefügten Zeichnung dargestellten Ausführungsbeispiels im einzelnen beschrieben.

Es zeigen:

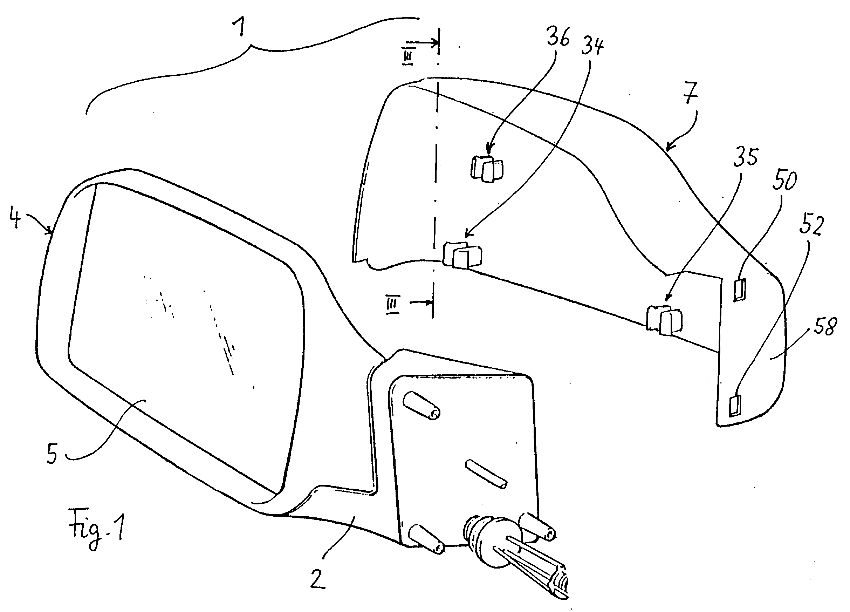

- Fig. 1: eine perspektivische Ansicht eines linken Pkw-Außenspiegels etwa aus der Sicht des Fahrers mit abgenommener Kappe;
- Fig. 2: eine Draufsicht auf den Außenspiegel nach Fig. 1 mit teilweise horizontal geschnittenem Spiegelgehäuse;

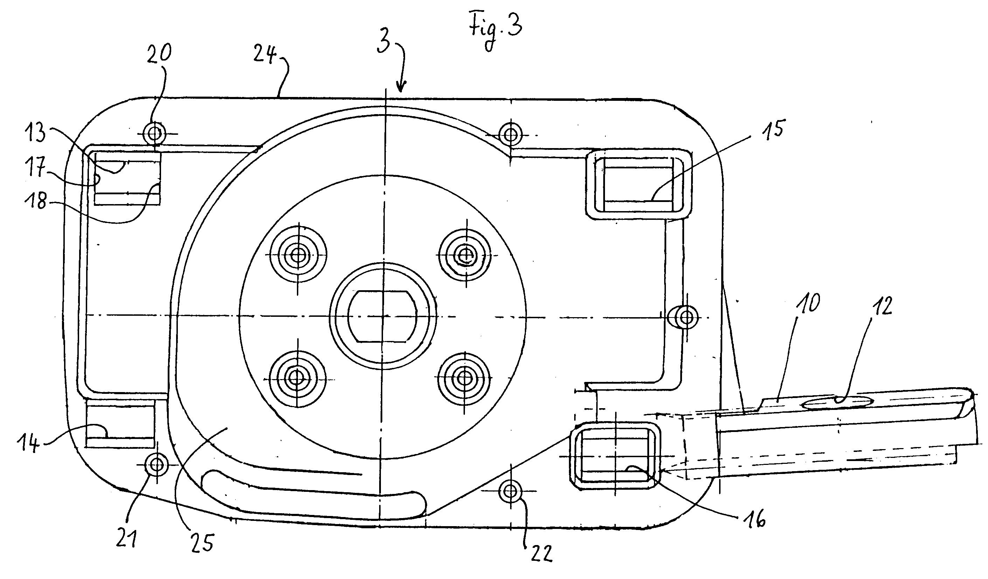

- Fig. 3: eine Ansicht einer Halteplatte von hinten;

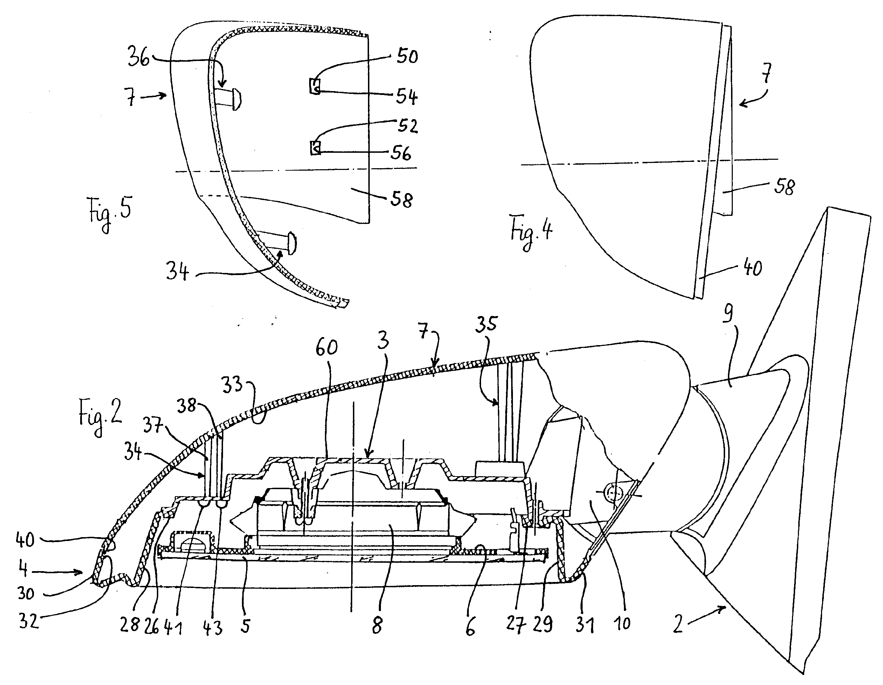

- Fig. 4: eine Seitenansicht der Kappe nach Fig. 3; und
- Fig. 5: einen Schnitt durch die Kappe längs der Linie III - III auf Fig. 1.

Der im ganzen mit 1 bezeichnete Außenspiegel weist einen Spiegelfuß 2 auf, der zum Anbau an die linke Fahrertür eines Pkw vorgesehen ist. Aus dem im wesentlichen dreieckigen Spiegelfuß 2 steht ein Arm 9 vor, auf welchem eine Halteplatte 3 um eine im angebauten Zustand im wesentlichen vertikale Achse mit Hilfe eines federbelasteten Rohrniets etwa nach der Deutschen Patentschrift 28 13 316 befestigt ist. An der Halteplatte 3 ist ein Spiegelglas 5 über eine Trägerplatte 6 und einen in Figur 2 schematisch dargestellten Verstellmechanismus 8 befestigt. An der Halteplatte 3 ist ferner ein Spiegelgehäuse 4 sowie eine Kappe 7 befestigt, welch letztere einen Ausschnitt aus dem Spiegelgehäuse 4 und den dadurch nach vorne freiliegenden Teil der Halteplatte 3 abdeckt.

Von der im wesentlichen rechteckigen, quer zu ihrer Fläche durch Sicken und dergleichen Einprägungen versteiften Halteplatte 3 aus Metall steht vom unteren Teil einer Schmalseite ein Lagerarm 11 mit Durchgangsbohrung 12 seitlich vor, an welchem die Halteplatte 3 auf dem Arm 9 befestigt ist, wobei der erwähnte Hohlniet durch die Durchgangsbohrung 12 hindurchgreift. In den vier Eckbereichen ist die Halteplatte 3 mit je einem rechtwinkligen Ausschnitt 13, 14, 15, 16 versehen, wobei gegenüberliegende Begrenzungskanten der Ausschnitte 13...16, wie etwa bei 17 und 18 angedeutet, freien Kanten zum Hintergriff von Spreizzapfen dienen. Die Halteplatte 3 besitzt ferner vier Gewindebohrungen in der Nähe ihrer Außenkante 24. Die Ausschnitte 13...16 sowie die Gewindebohrungen 20...23 sind um einen Mittenbereich 25 der Halteplatte 3 herum in diese eingebracht, auf welchem der erwähnte Verstellmechanismus 8 mit Spiegelglas 5 befestigt werden kann.

Das Spiegelgehäuse 4 aus schlagfestem Kunststoff besitzt einen um eine zentrale Öffnung umlaufenden Steg 26, 27 mit vier Löchern, die entsprechend der Lage der Gewindebohrungen 20...23 in den Steg 26, 27 eingebracht sind, so daß das Spiegelgehäuse 4 an der Halteplatte 3 mittels vier Schrauben befestigt werden kann. Der Steg 26, 27 geht in einen umlaufenden Wandabschnitt 28, 29 des Spiegelgehäuses über, der bei an die Halteplatte 3 anmontiertem Spiegelgehäuse 4 und bei an der Halteplatte 3 befestigtem Spiegelglas 5 letzteres seitlich mit geringem Abstand umgibt. Der Wandabschnitt 28, 29 ist außen zur Bildung eines Randwulstes 30, 31 nach vorne umgebogen, welcher am freien Ende unter Bildung eines umlaufenden Absatzes 32 verjüngt ist. Wie Figur 2 erkennen läßt, liegt das freie Ende des Randwulstes etwa in einer Ebene mit dem Spiegelglas 5, wenn letzteres sich in der Mitte seines Verstellbarkeitsbereichs befindet. Dadurch liegt die gesamte Vorderseite 60 der Halteplatte 3 zunächst nach vorne frei.

Die Kappe 7, die aus dem gleichen Material wie das Spiegelgehäuse 4 bestehen kann, setzt die übliche Form des vorderen Teils eines Spiegelgehäuses fort. Aus ihrer Innenfläche 33 stehen vier Spreizzapfen vor, von denen in den Figuren nur die Spreizzapfen 34, 35, 36 dargestellt sind. Die Spreizzapfen sind an Stellen aus der Innenwand 33 herausgeformt, die den Lagen der Ausschnitte 13...16 entsprechen. Jeder der vier Spreizzapfen besteht aus einem Paar paralleler eng beabstandeter Finger, wie etwa die Finger 37, 38 des Spreizzapfens 34. Am freien Ende trägt jeder Finger 37, 38 eine vom gegenüberliegenden Finger wegweisende Nase 41, 43, die dazu bestimmt ist, die Kanten 17, 18 der Ausschnitte 13...16 bei an die Halteplatte 3 angeklemmter Kappe 7 zu hintergreifen. Die Kappe 7 besitzt ferner an ihrem freien Rand einen umlaufenden, von außen zurückspringenden Randsteg 40, welcher bei angeklemmter Kappe 7 die Verjüngung des freien Randes des Spiegelgehäuses 4 am Absatz 32 unterfaßt. Die vier Spreizzapfen haben, bedingt durch die verhältnismäßige Flächigkeit der Halteplatte 3 und der windschlüpfigen und dadurch ausbeulenden Form der Kappe 7, unterschiedliche Länge, wie beispielsweise in Figur 2 an den Spreizzapfen 34 und 35 zu erkennen ist.

An den fußseitigen Randwulst 31 sind innen zwei nicht dargestellte Haken angeformt, von denen jeder etwa die Form eines der Finger 37, 38 besitzt. Entsprechend zur Lage der Haken sind an dem fußseitigen Wandteil 58 der Kappe 7 zwei Schultern 54, 56 in Form je einer freien Kante an je einer Öffnung 50, 52 ausgebildet, hinter welche die Haken zur zusätzlichen Sicherung der Kappe 7 greifen können.

Es versteht sich, daß die Kappe 7 mit einer andersfarbigen Lackierung versehen sein kann als die üblicherweise schwarze Farbe des Spiegelgehäuses 4.

Die Kappe 7 wird von vorne auf die Halteplatte 3 aufgeklemmt, wobei die Nasen der Spreizzapfen die Ausschnitte 13...16 durchdringen und sich an ihren Kanten festhaken. Dabei liegt der Randsteg 40 am Rand des Spiegelgehäuses 4 an, so daß die Form der Kappe 7 stetig in diejenige des rudimentären Spiegelgehäuses 4 übergeht. Gleichzeitig rasten die Haken federnd hinter die Schulter 54, 56 ein. Bei Bedarf kann die Kappe 7 von der Halteplatte 3 dadurch abgenommen werden, daß mit einem geeigneten zangenförmigen Werkzeug die Finger 37, 38 an ihren Nasen 41, 43 ergriffen und aufeinanderzubewegt werden, so daß die Nasen aus den Ausschnitten 13...16 freikommen und die Kappe von den Haken abgenommen werden kann.

Die Halteplatte 3 ist vermöge ihrer Aussteifung und ihrer federbelasteten Verankerung am Arm 9 vibrationsfrei am Spiegelfuß 2 gehalten. Ihre flächige Ausdehnung entspricht etwa derjenigen des Spiegelglases 5, so daß das Spiegelgehäuse 4 praktisch nur eine rückwärtige Einfassung für das Spiegelglas 5 bildet. Wenn die Kappe 7 in Schwingungen geraten sollte, liegen die Spreizzapfen im Bereich der Schwingungsknoten oder wenigstens in Bereichen verminderter Schwingungsamplitude. Damit ergibt sich auch bei ungünstigen Betriebsbedingungen des Fahrzeugs eine vibrationsfreie Wahrnehmung des Spiegelbildes für den Fahrer im Spiegelglas 5.

## Patentansprüche

1. Außenspiegel für ein Kraftfahrzeug mit einem an der Karosserie des Fahrzeugs befestigbaren Spiegelfuß und mit einem relativ zum Spiegelfuß verschwenkbaren Spiegelgehäuse, welches ein auf einer Halteplatte befestigtes Spiegelglas seitlich umgibt und mit der Halteplatte verbunden ist, sowie mit einer auf den vorderen Teil des Außenspiegels aufsteckbaren und am Rand formschlüssig in das Spiegelgehäuse übergehenden Kappe, dadurch gekennzeichnet, daß das Spiegelgehäuse (4) vorne aufgeschnitten ist und daß die Kappe den nach vorne frei liegenden Teil der Halteplatte abdeckend an die Halteplatte lösbar angeklemmt ist.

2. Außenspiegel nach Anspruch 1, dadurch gekennzeichnet, daß aus dem Boden (33) der Kappe (7) mehrere Spreizzapfen (34, 35, 36) vorstehen, welche an der Halteplatte ausgebildete freie Kanten (43, 44, 45, 46) lösbar hintergreifen.

3. Außenspiegel nach Anspruch 1 oder 2, dadurch gekennzeichnet, daß aus dem Inneren des Spiegelgehäuses wenigsten ein Haken vorsteht, welcher eine Schulter (49, 51) der Kappe (7) hintergreift.

4. Außenspiegel nach Anspruch 3, dadurch gekennzeichnet, daß der Haken und die Schulter (49, 51) in der Nähe des Spiegelfußes (2) ausgebildet sind.

5. Außenspiegel nach einem der Ansprüche 2 bis 4, dadurch gekennzeichnet, daß die freien Kanten an Ausschnitten (13,...,16) der Halteplatte (3) vorgesehen sind.

6. Außenspiegel nach einem der vorstehenden Ansprüche, dadurch gekennzeichnet, daß das Spiegelgehäuse (4) an der an dem Spiegelfuß (2) schwenkbar gelagerten Halteplatte (3) befestigt ist.

7. Außenspiegel nach Anspruch 6, dadurch gekennzeichnet, daß das Spiegelgehäuse einen inneren, um die Halteplatte umlaufenden Steg (26, 27) aufweist, welcher an der Halteplatte (3) befestigt ist.

8. Außenspiegel nach einem der Ansprüche 2 bis 7, dadurch gekennzeichnet, daß jeder Spreizzapfen aus einem Paar von Fingern (37, 38) besteht, deren jeweiliges freies Ende eine angeformte Rastnase (41, 43) trägt.

## Claims

1. An exterior mirror for a motor vehicle with a base fixable to the body of the vehicle, and with a casing pivotable horizontally relative to the base and surrounding the sides of a mirror glass fixed on a securing plate, the casing being connected to the securing plate, and with a cap, which clips on to the front part of the exterior mirror and which at its edge passes into the mirror casing in a positive locking manner, **characterised in that** the mirror casing (4) is cut out at the front and the cap (7) is detachably clamped against the securing plate in such a way that it covers the free forward portion of the securing plate (3).

2. An exterior mirror according to claim 1, **characterised in that** a plurality of expanding pins (34, 35, 36) project from the base (33) of the cap (7) and engage in a detachable manner behind the free edges (43 [*sic*], 44, 45, 46) formed on the securing plate.

3. An exterior mirror according to claim 1 or 2, **characterised in that** at least one bracket, which engages behind a shoulder (49, 51) of the cap (7), projects from the interior of the mirror casing.

4. An exterior mirror according to claim 3, **characterised in that** the bracket and the shoulder (49, 51) are formed in the region of the mirror base (2).

5. An exterior mirror according to one of claims 2 to 4, **characterised in that** the free edges are provided at openings (13...16) of the securing plate (3).

6. An exterior mirror according to one of the preceding claims, **characterised in that** the mirror casing (4) is attached to the securing plate (3) pivotably mounted on the mirror base (2).

7. An exterior mirror according to claim 6, **characterised in that** the mirror casing has an internal rim (26, 27) surrounding the securing plate (3) and attached thereto.

8. An exterior mirror according to one of claims 2 to 7, **characterised in that** each expanding pin is made from a pair of fingers (37, 38), the respective free end of which has an integrally moulded catch (41, 43).

## Revendications

1. Rétroviseur extérieur pour un véhicule avec un pied de rétroviseur pouvant être fixé à la carrosserie du véhicule et avec un boîtier de rétroviseur pivotant par rapport au pied de rétroviseur, lequel entoure latéralement une glace de rétroviseur fixée sur une plaque support et est relié à la plaque support ainsi qu'à un couvercle pouvant être emboîté sur la partie avant du rétroviseur extérieur et passant à engagement positif sur le bord dans le boîtier de rétroviseur, caractérisé en ce que le boîtier de rétroviseur (4) est découpé à l'avant et en ce que le couvercle (7) est serré de façon amovible sur la plaque support en recouvrant la partie libre vers l'avant de la plaque support (3).

2. Rétroviseur extérieur selon la revendication 1, caractérisé en ce que plusieurs tenons d'écartement (34, 35, 36) saillent du fond (33) du couvercle (7), lesquels s'agrippent de façon amovible à l'arrière de bords libres (43, 44, 45, 46) formés sur la plaque support.

3. Rétroviseur extérieur selon la revendication 1 ou 2, caractérisé en ce qu'un crochet au moins saille de l'intérieur du boîtier de rétroviseur, lequel s'agrippe à l'arrière d'un épaulement (49, 51) du couvercle (7).

4. Rétroviseur extérieur selon la revendication 3, caractérisé en ce que le crochet et l'épaulement (49, 51) sont formés à proximité du pied de rétroviseur (2).

5. Rétroviseur extérieur selon l'une des revendications 2 à 4, caractérisé en ce que les bords libres sont prévus sur des découpes (13,...,16) de la plaque support (3).

6. Rétroviseur extérieur selon l'une des revendications précédentes, caractérisé en ce que le boîtier de rétroviseur (4) est fixé sur la plaque support (3) montée pivotante sur le pied de rétroviseur (2).

7. Rétroviseur extérieur selon la revendication 6, caractérisé en ce que le boîtier de rétroviseur présente une entretoise (26, 27) intérieure tournant autour de la plaque support, qui est fixée à la plaque support (3).

8. Rétroviseur extérieur selon l'une des revendications 2 à 7, caractérisé en ce que chaque tenon d'écartement est constitué d'une paire de doigts (37, 38) dont chaque extrémité libre porte un taquet d'arrêt formé (41, 43).
